(19) Europäisches Patentamt
European Patent Office
Office européen des brevets

(11) **EP 2 357 753 A1**

(12) **EUROPEAN PATENT APPLICATION**
published in accordance with Art. 153(4) EPC

(43) Date of publication:
**17.08.2011 Bulletin 2011/33**

(51) Int Cl.:
**H04L 9/08** *(2006.01)*        **H04N 7/167** *(2011.01)*

(21) Application number: **09826170.4**

(22) Date of filing: **13.11.2009**

(86) International application number:
**PCT/JP2009/069395**

(87) International publication number:
**WO 2010/055924 (20.05.2010 Gazette 2010/20)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.11.2008 JP 2008292577**

(71) Applicants:
• **Oki Semiconductor Co., Ltd.**
  **Tokyo 193-8550 (JP)**
• **Panasonic Corporation**
  **Kadoma-shi**
  **Osaka 571-8501 (JP)**

(72) Inventors:
• **MUTO, Akie**
  **Hachiouji-shi**
  **Tokyo 193-8550 (JP)**
• **HAMAI, Shinji**
  **Kadoma-shi**
  **Osaka 571-8501 (JP)**

(74) Representative: **Popp, Eugen et al**
**Meissner, Bolte & Partner GbR**
**Widenmayerstrasse 48**
**80538 München (DE)**

(54) **CONFIDENTIAL INFORMATION TRANSMISSION METHOD, CONFIDENTIAL INFORMATION TRANSMISSION SYSTEM, AND CONFIDENTIAL INFORMATION TRANSMISSION DEVICE**

(57)    There is provided a secret data transmission method where a first device generates plural pieces of distributed data including data of a master key and transmits these by wireless communication to a second device and where the second device receives the plural pieces of distributed data and reconstructs the master key, wherein the first device arranges data obtained by performing an EXOR operation in sequence on plural pieces of random number data and the master key to generate secret data, generates a last piece of distributed data by performing an EXOR operation in sequence on the plural pieces of distributed data and the secret data, and transmits the plural pieces of distributed data to the second device, and the second device performs an EXOR operation in sequence on the plural pieces of distributed data to reconstruct the secret data, divides the reconstructed secret data, and performs an EXOR operation on the divided pieces of data to reconstruct the master key.

FIG. 1A

FIG. 1B

SECRET DATA TRANSMISSION SYSTEM OF EMBODIMENT 1 OF PRESENT INVENTION

EP 2 357 753 A1

**Description**

TECHNICAL FIELD

The present invention relates to a secret data transmission method, a secret data transmission system, and a secret data transmission device where data that is to be made secret (that is, secret data) including a master key that is a secret key used in encryption and the like is divided into plural pieces and transmitted from a transmitting side to a receiving side.

BACKGROUND ART

Conventionally, there has been known methods where, when transmitting important data such as an encryption key by wireless communication or the like, secret data of a long bit string is prepared by using a hash function, for example, in order to reduce the potential for illegal interception. However, in methods where secret data is prepared using a hash function, arithmetic processing also ends up taking time, which has been an obstacle to high-speed communication.

Thus, in order to overcome this obstacle, as disclosed in JP-A No. 2007-235516 below, for example, there has been proposed a secret sharing scheme technology where secret data such as an encryption key is divided into plural pieces of distributed data and is transmitted from a transmitting side to a receiving side. Secret sharing schemes are methods where secret data is divided into plural pieces of distributed data and where the original data cannot be reconstructed unless a certain determined number of those pieces of distributed data are assembled, and it becomes possible to increase the speed of arithmetic processing by shortening the bit strings configuring the pieces of distributed data.

SUMMARY OF INVENTION

Technical Problem

However, in conventional secret sharing scheme technologies, there is the danger that when the bit strings configuring the pieces of distributed data are shortened in order to increase the speed of arithmetic processing, the master key such as the encryption key will be illegally intercepted by a malicious third party. When the bit strings of the pieces of distributed data are lengthened in order to prevent this, increasing the speed of arithmetic processing is inhibited, and the advantages of a secret sharing scheme cannot be fully utilized. Further, in secret sharing schemes, the original data can be reconstructed by receiving a certain determined number of the pieces of distributed data that have been transmitted. Thus, the danger of illegal interception becomes larger depending on the use environment and the like. Consequently, it has still been difficult to realize a secret data transmission method, a secret data transmission system, or a secret data transmission device with which technologically sufficient satisfaction is obtained.

Solution to Problem

A secret data transmission method pertaining to an aspect of the present invention is a secret data transmission method where a first device generates first to nth (n is an arbitrary integer) pieces of distributed data including data of a master key of i bits (i is an arbitrary integer) and transmits the first to nth pieces of distributed data by wireless communication to a second device and where the second device receives the first to nth pieces of distributed data and reconstructs the master key of i bits.

Here, the first device arranges first to (m→1)th (m is an arbitrary integer) pieces of data rs1 to rs(m-1) including random numbers of i bits and an mth piece of data rm that is obtained by performing a logic operation, based on whether bit values match or do not match, in sequence on the first to (m-1)th pieces of data rs1 to rs(m-1) and the master key to generate secret data of j bits = i bits $\times$ m bits, generates first to (n-1)th pieces of distributed data r1 to r(n-1) including random numbers of j bits and an nth piece of distributed data rn of j bits that is obtained by performing a logic operation, based on whether bit values match or do not match, in sequence on the first to (n-1)th pieces of distributed data and the secret data, and transmits the first to nth pieces of distributed data r1 to rn to the second device.

Moreover, the second device receives the first to nth pieces of distributed data r1 to rn, performs a logic operation, based on whether bit values match or do not match, in sequence on the first to nth pieces of distributed data r 1 to rn that have been received to reconstruct the secret data, divides the reconstructed secret data per i bits to obtain m number of first to mth pieces of data rs1 to rsm, and performs a logic operation, based on whether bit values match or do not match, on the first to mth pieces of data rs1 to rsm that have been divided to reconstruct the master key of i bits.

Another secret data transmission method pertaining to an aspect of the present invention is a secret data transmission method where a first device generates distributed data including data of a master key of i bits (i is an arbitrary integer) and transmits the distributed data by wireless communication to a second device and where the second device transmits an acknowledgment-of-receipt signal to the first device when the second device has normally received the distributed data and reconstructs the master key from the distributed data that the second device has normally received.

Here, the first device transmits first to (n-1)th pieces of distributed data r1 to r(n-1) each differing and including random numbers of j bits to the second device, generates m-1 number of pieces of distributed data f1 to f(m-1) each differing and including random numbers of i bits when the first device has received the acknowledgment-of-receipt signals corresponding to the first to (n-1)th pieces of distributed data, performs a logic operation, based on whether bit values match or do not match, in sequence on data obtained by dividing per i bits the first to (n-1)th pieces of distributed data corresponding to the acknowledgment-of-receipt signals, the pieces of data f1 to f(m-1), and the master key to obtain an mth piece of data fm, and transmits data obtained by interconnecting the pieces of data f1 to fin in sequence as an nth piece of distributed data rn to the second device.

Moreover, the second device receives the first to nth pieces of distributed data r1 to rn, performs a logic operation, based on whether bit values match or do not match, in sequence on the first to nth pieces of distributed data r1 to rn that have been received to reconstruct secret data, divides the reconstructed secret data per i bits to obtain m number of first to mth pieces of data rs1 to rsm, and performs a logic operation, based on whether bit values match or do not match, in sequence on the first to mth pieces of data rs1 to rsm that have been divided to reconstruct the master key of i bits.

Still another secret data transmission method pertaining to an aspect of the present invention is a secret data transmission method where a first device generates distributed data including data of a master key of i bits (i is an arbitrary integer) and transmits the distributed data by wireless communication to a second device and where the second device transmits an acknowledgment-of-receipt signal to the first device when the second device has normally received the distributed data and reconstructs the master key from the distributed data that the second device has normally received.

Here, the first device transmits first to nth pieces of distributed data r1 to rn each differing and including random numbers of j bits to the second device and generates the master key by performing a logic operation, based on whether bit values match or do not match, in sequence on data obtained by dividing per i bits the first to nth pieces of distributed data corresponding to the acknowledgment-of-receipt signals when the first device has received the acknowledgment-of-receipt signals corresponding to the first to nth pieces of distributed data.

Moreover, the second device receives the first to nth pieces of distributed data r1 to rn, performs a logic operation, based on whether bit values match or do not match, in sequence on the first to nth pieces of distributed data r1 to rn that have been received to reconstruct secret data, divides the reconstructed secret data per i bits to obtain m number of first to mth pieces of data rs1 to rsm, and performs a logic operation, based on whether bit values match or do not match, on the first to mth pieces of data rs1 to rsm that have been divided to reconstruct the master key of i bits.

A secret data transmission system pertaining to an aspect of the present invention is a secret data transmission system where a first device generates first to nth (n is an arbitrary integer) pieces of distributed data including data of a master key of i bits (i is an arbitrary integer) and transmits the first to nth pieces of distributed data by wireless communication to a second device and where the second device receives the first to nth pieces of distributed data and reconstructs the master key of i bits.

Here, the first device has: secret data generating unit that arranges first to (m-1)th (m is an arbitrary integer) pieces of data rs1 to rs(m-1) including random numbers of i bits and an mth piece of data rm that is obtained by performing an exclusive-OR operation in sequence on the first to (m-1)th pieces of data rs1 to rs(m-1) and the master key of i bits to generate secret data of j bits = i bits $\times$ m bits; distributed data generating unit that generates, from first to (n-1)th pieces of distributed data r1 to r(n-1) including random numbers of the j bits and an nth piece of distributed data rn of the j bits that is obtained by performing an exclusive-OR operation in sequence on the first to (n-1)th pieces of distributed data and the secret data of j bits, the first to nth pieces of distributed data r1 to rn; and first transmitting and receiving unit that transmits the first to nth pieces of distributed data r1 to rn to the second device.

Moreover, the second device has: transmitting and receiving unit that receives the first to nth pieces of distributed data r1 to rn; secret data reconstructing unit that performs an exclusive-OR operation in sequence on the first to nth pieces of distributed data that have been received to reconstruct the secret data of j bits; and master key reconstructing unit that divides the secret data of j bits that has been reconstructed into the m number to obtain the first to mth pieces of data rs1 to rsm and performs an exclusive-OR operation on the first to mth pieces of data rs1 to rsm that have been divided to reconstruct the master key of i bits.

A secret data transmission device pertaining to an aspect of the present invention includes: a distributed data generating unit that generates m (m is a positive integer equal to or greater than 2) number of pieces of random number data including random numbers of i (i is an arbitrary positive integer) bits and generates pieces of distributed data including the m number of pieces of random number data it has generated and sequence numbers representing a packet transmission sequence; and a transmitting and receiving unit that transmits the pieces of distributed data via a wireless communication path to a secret data receiving device and receives acknowledgment-of-receipt signals on those pieces of distributed data that are transmitted from that secret data receiving device,

Here, when the transmitting and receiving unit does not receive, within a certain amount of time after transmitting a piece of distributed data, an acknowledgment-of-receipt signal corresponding to the piece of distributed data it has transmitted, the distributed data generating unit generates a new piece of distributed data from a sequence number that is the same as the sequence number of that transmitted piece of distributed data and m number of pieces of random number data obtained as a result of being newly generated, and when the transmitting and receiving unit has received, within a certain amount of time after transmitting a piece of distributed data, an acknowledgment-of-receipt signal corresponding to the piece of distributed data it has transmitted, the distributed data generating unit generates a new piece of distributed data from a sequence number obtained by increasing the sequence number of that transmitted piece of distributed data by 1 and m number of pieces of random number data obtained as a result of being newly generated, and when the transmitting and receiving unit has received first to (n-1)th (n is a positive integer equal to or greater than 2) acknowledgment-of receipt signals, the distributed data generating unit generates an nth piece of distributed data from values obtained by performing a logic operation on (m-1) number of pieces of random number data obtained as a result of being newly generated, a master key of i bits, and (n-1)*m number of pieces of random number data included in first to (n-1)th pieces of distributed data corresponding to the first to (n-1)th acknowledgment-of-receipt signals and a sequence number obtained by increasing the sequence number of that (n-1)th piece of distributed data by 1, and when the transmitting and receiving unit does not receive, within a certain amount of time after transmitting the nth piece of distributed data, an nth acknowledgment-of-receipt signal corresponding to that nth piece of distributed data, the distributed data generating unit generates a new nth piece of distributed data from values obtained by performing a logic operation on (m-1) number of pieces of random number data obtained as a result of being newly generated, the master key, and (n-1)*m number of pieces of random number data included in the first to (n-1)th pieces of distributed data and a sequence number that is the same as the sequence number of that nth piece of distributed data.

Further, the secret data transmission device pertaining to an aspect of the present invention includes: when the transmitting and receiving unit does not receive, within a certain amount of time after transmitting a piece of distributed data, an acknowledgment-of-reccipt signal corresponding to the piece of distributed data it has transmitted, the distributed data generating unit generates a piece of distributed data newly from a sequence number that is the same as the sequence number of that piece of distributed data and m number of pieces of random number data obtained as a result of being newly generated, and when the transmitting and receiving unit has received, within a certain amount of time after transmitting a piece of distributed data, an acknowledgment-of-receipt signal corresponding to the piece of distributed data it has transmitted, the distributed data generating unit generates a piece of distributed data newly from a sequence number obtained by increasing the sequence number of that piece of distributed data by 1 and m number of pieces of random number data obtained as a result of being newly generated, and when the transmitting and receiving unit has received first to nth (n is a positive integer equal to or greater than 2) acknowledgment-of-receipt signals, the distributed data generating unit performs a logic operation on n*m number of pieces of random number data included in first to nth pieces of distributed data corresponding to those first to nth acknowledgment-of-receipt signals to generate a master key of i bits.

Advantageous Effects of Invention

According to the secret data transmission method, the secret data transmission system, and the secret data transmission device pertaining to the aspects of the present invention, the secret data and the plural pieces of distributed data using the secret data are configured by long bit strings, the pieces of distributed data are transmitted (e.g., transmitted by low transmission power) from the first device to the second device, and the second device is configured so as to be capable of reconstructing the master key when it has received all of the plural pieces of distributed data, so there can be established a communication situation where it is difficult for the master key to be illegally intercepted by a malicious third party. Moreover, the secret data of a long bit string and the distributed data using the secret data can be generated easily by performing a simple logic operation based on whether bit values match or do not match without using a complex operation such as a hash function, so the amount of arithmetic processing time can be shortened, and high-speed communication can be realized easily.

BRIEF DESCRIPTION OF DRAWINGS

FIG. 1 is a general relevant portions configuration diagram showing details of a secret data transmission system in embodiment 1 of the present invention;
FIG. 2 is a configuration diagram showing an overview of the secret data transmission system in embodiment 1 of the present invention;

FIG. 3 is a functional block diagram showing secret data generating unit 40 in FIG. 1;

FIG. 4 is a functional block diagram showing master key reconstructing unit 60 in FIG. 1;

FIG. 5 is a general relevant portions configuration diagram showing details of a secret data transmission system in embodiment 2 of the present invention;

FIG. 6 is a configuration diagram showing an overview of a secret data transmission system in embodiment 3 of the present invention;

FIG. 7 is a functional block diagram showing a distributed data generating unit 14A in FIG. 6;

FIG. 8 is a functional block diagram showing a secret key reconstructing unit 23A in FIG. 6;

FIG. 9 is a flowchart showing the operation of a distributed data packet assembling component 72 in the distributed data generating unit 14A of FIG. 7;

FIG. 10 is a flowchart showing the operation of a secret key assembling component 81 in the secret key reconstructing unit 23A of FIG. 8;

FIG. 11 is a configuration diagram showing an overview of a secret data transmission system in embodiment 4 of the present invention;

FIG. 12 is a functional block diagram showing a distributed data generating unit 14B in FIG. 11; and

FIG. 13 is a flowchart showing the operation of a distributed data packet assembling component 72B in the distributed data generating unit 14B of FIG. 12.

DESCRIPTION OF EMBODIMENTS

Modes for carrying out the present invention will become apparent when the description of the embodiments below is read in conjunction with the attached drawings. The drawings are only for explanation and are not intended to limit the scope of the present invention.

(Embodiment 1)

(Configuration of Embodiment 1)

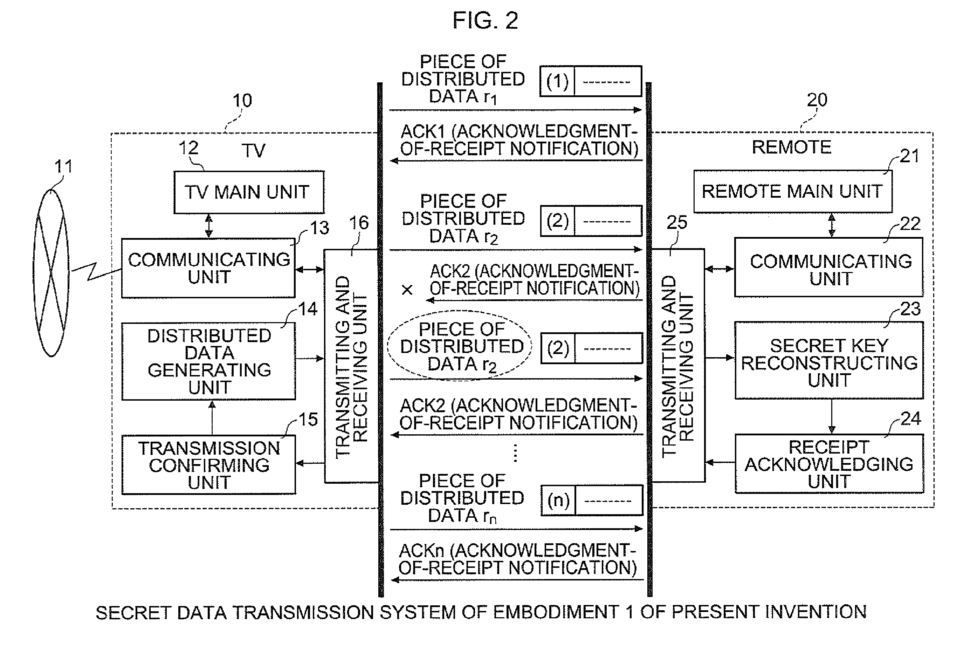

FIG. 2 is a configuration diagram showing an overview of a secret data transmission system in embodiment 1 of the present invention.

This secret data transmission system is a system where wireless communication is performed between a digital home electrical appliance (for example, a television receiver; hereinafter simply called a "TV") 10 that uses digital-related technology of household electrical machinery and equipment (hereinafter called a "home electrical appliance") and a remote controller (hereinafter called a "remote") 20 that remotely controls the TV 10.

The TV 10 is connected to a communication network 11 such as the Internet and is configured so as to be capable of transmitting data to and receiving data from another data terminal such as a personal computer (hereinafter called a "PC"). The TV 10 has a TV main unit 12 such as a receiver, and a communicating unit 13 is connected to this TV main unit 12. The communicating unit 13 performs transmission and reception of data between the communication network 11 and the TV main body 12. In this TV 10, there are also disposed a distributed data generating unit 14 and a transmission confirming unit 15. A transmitting and receiving unit 16 is connected to the communicating unit 13, the distributed data generating unit 14, and the transmission confirming unit 15.

The distributed data generating unit 14 generates pieces of distribution data r1, r2, ..., rn of a format differing from that of a secret sharing scheme and gives the pieces of distributed data to first transmitting and receiving unit (for example, a transmitting and receiving unit) 16. The transmission confirming unit 15 is connected to the distributed data generating unit 14. When the transmission and reception confirming unit 15 receives via the transmitting and receiving unit 16 acknowledgment-of-receipt notification signals ACK1, ACK2, ..., ACKn sent from the remote 20, the transmission and reception confirming unit 15 confirms, and notifies the distributed data generating unit 14 of, the transmission status. The transmitting and receiving unit 16 performs near field communication (for example, where the use frequency is several GHz and the communication distance is several meters) with respect to the remote 20.

The remote 20 has a remote main unit 21 for remote control, and a second communicating unit 22 is connected to this remote main unit 21. In the remote 20, there are also disposed a secret key reconstructing unit 23 and a receipt acknowledging unit 24, and second transmitting and receiving unit (for example, a transmitting and receiving unit) 25 is connected to the communicating unit 22, the secret key reconstructing unit 23, and the receipt acknowledging unit 24.

The communicating unit 22 performs transmission and reception of data between the remote main unit 21 and the transmitting and receiving unit 25. When the secret key reconstructing unit 23 receives via the transmitting and receiving unit 25 the pieces of distributed data r1, r2, ..., rn sent from the TV 10, the secret key reconstructing unit 23 reconstructs a secret key from those pieces of distributed data r1, r2, ..., rn, and the receipt acknowledging unit 24 is connected to the secret key reconstructing unit 23. When the receipt acknowledging unit 24 receives via the transmitting and receiving unit 25 and the secret key reconstructing unit 23 the pieces of distributed data r1, r2, ..., rn sent from the TV 10, the receipt acknowledging unit 24 confirms the receipt status and gives the acknowledgment-of-receipt signals ACK1, ACK2, ..., ACKn to the transmitting and receiving unit 25. The transmitting and receiving unit 25 performs near field communication with respect to the TV 10.

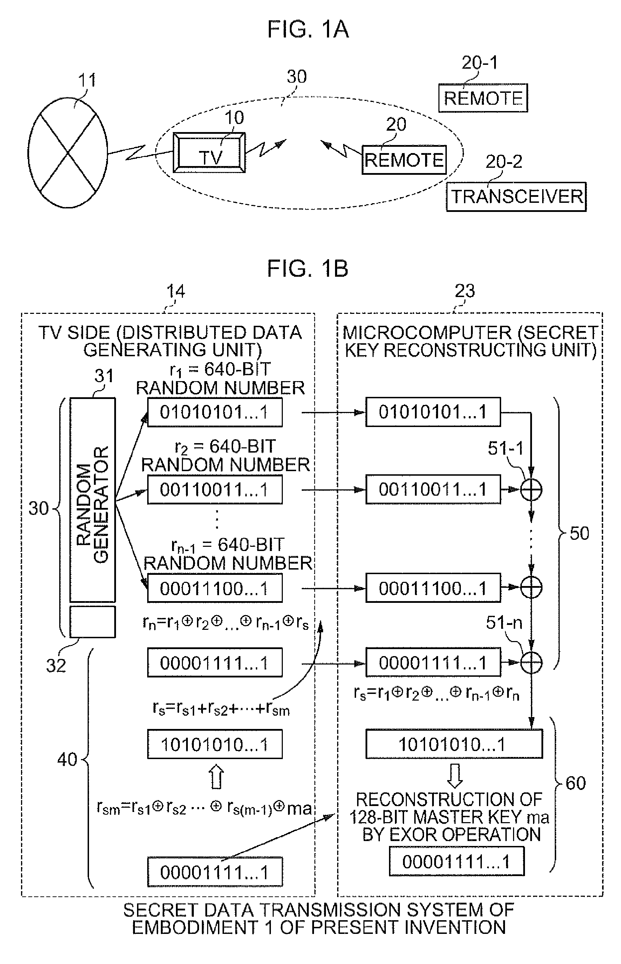

FIG. 1 is a general configuration diagram showing details of the secret data transmission system in embodiment 1 of the present invention.

It will be assumed that there exist another remote 20-1 and a receiver 20-2 in the neighborhood of a communication area 30 of the TV 10 and the remote 20.

The distributed data generating unit 14 on the TV 10 side is configured by distributed data generating unit 30 and secret data generating unit 40. The distributed data generating unit 30 generates first to nth pieces of distributed data r1 to rn each including random numbers of j bits (e.g., 640 bits). The distributed data generating unit 30 is configured by a random generator 31, which generates first to (n-1)th pieces of distributed data r1 to r(n-1) each including random numbers of j bits, and computing unit 32, which performs an exclusive-OR (hereinafter called "EXOR") operation in sequence on the first to (n-1)th pieces of distributed data r1 to r(n-1) and secret data rs of j bits to obtain the nth piece of distributed data rn of j bits.

The secret data generating unit 40 arranges first to (m-1)th pieces of data rs1 to rs(m-1) each including random numbers of i bits and an mth piece of data rm that is obtained by performing an EXOR operation in sequence on the first to (m-1)th pieces of data rs1 to rs(m-1) and a master key rsm of i bits to generate the secret data rs of j bits (= i bits $\times$ m bits).

The secret key reconstructing unit 23 on the remote 20 side is configured by secret data reconstructing unit 50 and master key reconstructing unit 60. The secret data reconstructing unit 50 performs an EXOR operation in sequence on the first to nth pieces of distributed data r1 to rn that have been received to reconstruct the secret data rs of j bits. The secret data reconstructing unit 50 is configured by n number of cascade-connected EXOR gates 51-1 to 51-n. The master key reconstructing unit 60 divides the reconstructed secret data rs of j bits into m number to obtain first to mth pieces of data rs1 to rsm and performs an EXOR operation on the first to mth pieces of data rs1 to rsm that have been divided to reconstruct the master key rsm of i bits.

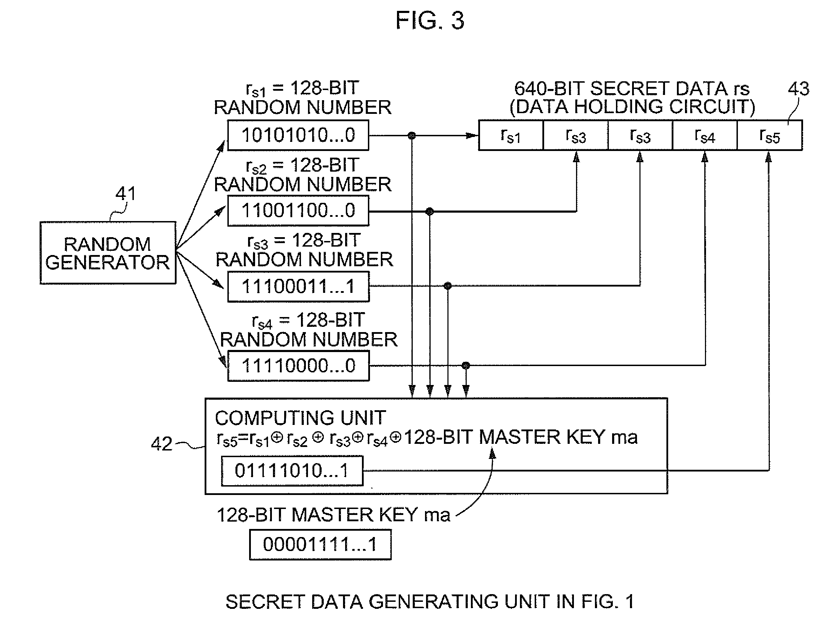

FIG. 3 is a functional block diagram showing the secret data generating unit 40 in FIG. 1.
The secret data generating unit 40 is configured by a random generator 41 that generates the first to (m-1)th pieces of data rs1 to rs(m-1) (e.g., m = 5; rs1 to rs4) each including random numbers of i bits (e.g., 128 bits), computing unit 42 that performs an EXOR operation in sequence on the first to fourth pieces of data rs1 to rs4 and the master key rsm of 128 bits to obtain the fifth piece of data r5, and a data holding circuit 43 that arranges the first to fifth pieces of data rs1 to rs5 and holds the secret data rs of 640 bits = 128 bits 5.

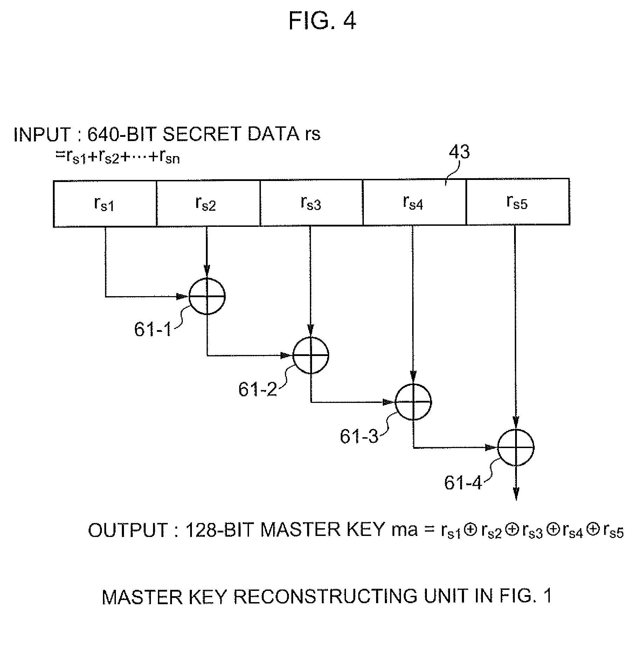

FIG. 4 is a functional block diagram showing the master key reconstructing unit 60 in FIG. 1.
The master key reconstructing unit 60 is configured by the function of dividing the secret data rs of 640 bits held in the data holding circuit 43 into five and retrieving the first to fifth pieces of data rs1 to rs5 and by four cascade-connected EXOR gates 61-1 to 61-4 that are for performing an EXOR operation on the first to fifth pieces of data rs1 to rs5 that have been retrieved to reconstruct the master key rsm of 120 bits.

(Secret Data Transmission Method of Embodiment 1)

There will be described a case where, in order to make it possible to purchase products from the TV 10 via the communication network 11, for example, a credit card transaction function is disposed in the TV 10 and the master key rsm that is an encryption key is transmitted from this TV 10 to the remote 20.

In the distributed data generating unit 14 on the TV 10 side, the secret data generating unit 40 of FIG. 3 generates, with the random generator 41, the first to fourth pieces of data rs1 to rs4 each including random numbers of 128 bits and performs, with the computing unit 42, an EXOR operation of the following expression (1) to obtain the fifth piece of data rs5 of 128 bits.

Expression 1

$$rs5 = rs1 \ xor \ rs2 \ xor \ rs3 \ xor \ rs4 \ xor \ (\text{master key rsm of 128 bits}) \cdots (1)$$

Here, "xor" is an EXOR operation.

Then, the secret data generating unit 40 holds the first to fifth pieces of data rs1 to rs5 each of 128 bits in sequence in the data holding circuit 43, generates the secret data rs of 640 bits, and gives the secret data rs of 640 bits to the computing unit 32 in the distributed data generating unit 30 of FIG. 1. The distributed data generating unit 30 generates the first to fourth pieces of distributed data r1 to r4 each including random numbers of 640 bits from the random generator 41 and gives the first to fourth pieces of distributed data r1 to r4 to the computing unit 32. The computing unit 32 performs an EXOR operation of the following expression (2) to obtain the fifth piece of distributed data r5 of 640 bits.

Expression 2

$$r5 = r1 \ xor \ r2 \ xor \ r3 \ xor \ r4 \ xor \ (\text{secret data rs of 640 bits}) \cdots (2)$$

Then, as shown in FIG. 2, sequence numbers (1), (2), (3), (4), and (5) are added to the heads of the first to fifth pieces of distributed data r1 to r5 each of 640 bits, and the first to fifth pieces of distributed data r1 to r5 are converted into high-frequency radio waves and are transmitted to the remote 20 in the order of the sequence numbers by the transmitting and receiving unit 16.

On the remote 20 side, when the transmitting and receiving unit 25 receives in sequence the first to fifth pieces of distributed data r1 to r5 that have been sent in the sequence of the sequence numbers (1), (2), (3), (4), and (5), the transmitting and receiving unit 25 sends these received signals via the secret key reconstructing unit 23 to the receipt acknowledging unit 24. When the receipt acknowledging unit 24 has received each of the first to fifth pieces of distributed data r1 to r5, it sends to the TV 10 each of the acknowledgment-of-receipt notification signals ACK 1 to ACK5 via the transmitting and receiving unit 25.

When the transmitting and receiving unit 16 on the TV 10 side receives those acknowledgment-of-receipt notification signals ACK 1 to ACK5, it sends these to the transmission confirming unit 15. When the transmission confirming unit 5 receives each of the acknowledgment-of-receipt notification signals ACK1 to ACK5, it judges that the transmission has been successful and causes the next pieces of distributed data r2 to r5 to be transmitted in sequence via the distributed data generating unit 14 and the transmitting and receiving unit 16. That is, when the transmission of the first piece of distributed data r1 has been successful, the transmission confirming unit 15 transmits the second piece of distributed data r2, and when the transmission of the second piece of distributed data r2 has been successful, the transmission confirming unit 15 transmits the third piece of distributed data r3 and thereafter similarly transmits the pieces of distributed data until the fifth piece of distributed data r5.

At this time, when, after transmitting a piece of distributed data (for example, the second piece of distributed data r2), the transmission confirming unit 15 does not receive the acknowledgment-of-receipt notification signal ACK2 with respect to that piece of distributed data, or in other words when there ends up being a failure to receive the acknowledgment-of-receipt notification signal ACK2, the transmission confirming unit 15 causes the same piece of distributed data r2 to be transmitted again via the distributed data generating unit 14 and the transmitting and receiving unit 16. Thereafter, when the transmission confirming unit 15 has received the acknowledgment-of-receipt notification signal ACK2 sent from the remote 20, the transmission confirming unit 15 judges that the transmission has been successful and causes the next third piece of distributed data r3 to be transmitted via the distributed data generating unit 14 and the transmitting and receiving unit 16. Thereafter, the same transmission and reception of the pieces of distributed data and the acknowledgment-of-receipt notification signals is performed.

When the secret key reconstructing unit 23 on the remote 20 side receives via the transmitting and receiving unit 25 all of the first to fifth pieces of distributed data r1 to r5 sent from the TV 10 side, the EXOR gates 51-1 to 51-5 in the secret data reconstructing unit 50 of F1G 1 perform an EXOR operation of the following expression (3) on the first to fifth pieces of distributed data r1 to rn that have been received to reconstruct the secret data rs of 640 bits and send the secret data rs of 640 bits to the master key reconstructing unit 60.

Expression 3

$$rs = r1 \ xor \ r2 \ xor \ r3 \ xor \ r4 \ xor \ r5 \cdots (3)$$

The master key reconstructing unit 60 of FIG. 4 divides the reconstructed secret data rs of 640 bits into five to obtain the first to fifth pieces of data rs1 to rs5 and performs, with the EXOR gates 61-1 to 61-4, an EXOR operation of the following expression (4) on the first to fifth pieces of data rs1 to rs5 that have been divided to reconstruct the master key rsm of 128 bits.

Expression 4

$$rsm = rs1 \text{ xor } rs2 \text{ xor } rs3 \text{ xor } rs4 \text{ xor } rs5 \cdots (4)$$

Hereafter, the TV 10 and the remote 20 perform data encryption and the like using the master key rsm as a common key and perform transmission and reception, and credit card transactions and the like by the TV 10 are performed by the remote control of the remote 20.

(Effects of Embodiment 1)

According to present embodiment 1, there are effects such as the following (a) and (b).

(a) The secret data rs and the first to fifth pieces of distributed data r1 to r5 using the secret data rs are configured by long bit strings (e,g., 640 bits), the first to fifth pieces of distributed data r1 to r5 are transmitted from the TV 10 to the remote 20, and the remote 20 is configured so as to be capable of reconstructing the master key rsm, when it has received all of the first to fifth pieces of distributed data r1 to r5. Consequently, there can be established a communication situation where it is difficult for the master key rsm to be illegally intercepted by a malicious third party. Moreover, the secret data rs of a long bit string and the fifth piece of distributed data r5 using the secret data rs can be generated easily by a simple EXOR operation without using a complex operation such as a hash function. Consequently, the amount of arithmetic processing time can be shortened, and high-speed communication can be realized easily.

(b) Sometimes the TV 10 and the remote 20 shown in FIG. 1 receive radio interference from the other remote 20-1 and the transceiver 20-2 in the neighborhood of the communication area 30, and the TV 10 ends up failing to receive from the remote 20 the acknowledgment-of-receipt notification signals ACK for notifying the TV 10 that transmission of the pieces of distributed data from the TV 10 to the remote 20 has been completed. Even in such cases, the TV 10 is configured to execute transmission of the same pieces of distributed data again. Consequently, the remote 20 can reliably receive the pieces of distributed data r1 to r5, and the reliability of secret data transmission can be improved.

(Embodiment 2)

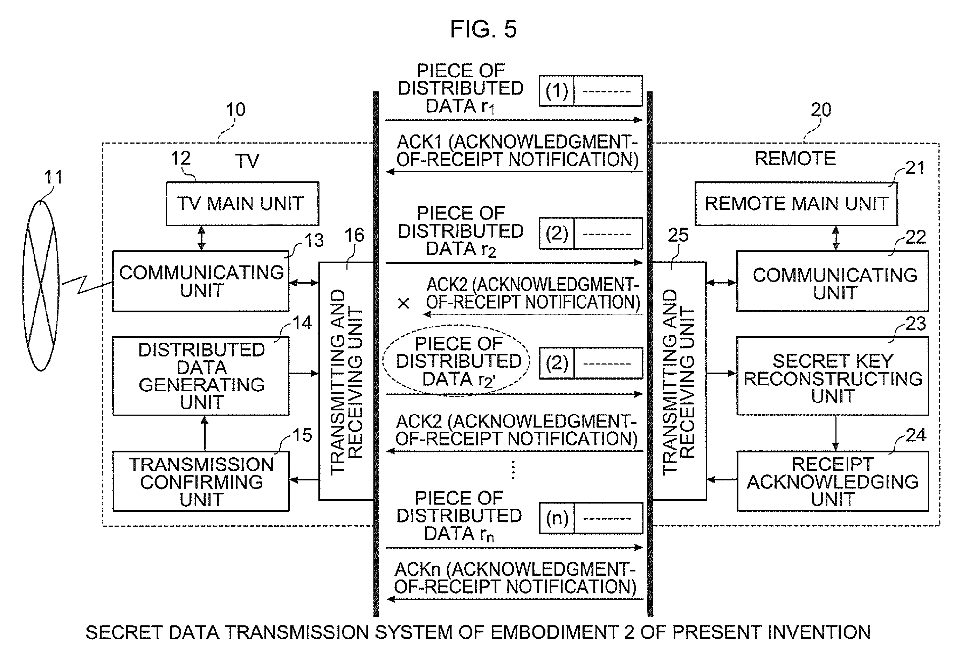

FIG. 5 is a configuration diagram showing an overview of a secret data transmission system in embodiment 2 of the present invention, and common reference numerals are given to elements shared in common with the elements in FIG. 2 showing embodiment 1.

In the secret data transmission system of present embodiment 2, when a failure to receive an acknowledgment-of-receipt notification signal (e.g., ACK2) from the remote 20 occurs in the transmission confirming unit 15 on the TV 10 side, the TV 10 does not transmit the same piece of distributed data (e.g., r2) again as in embodiment 1. According to present embodiment 2, in this case, the TV 10 transmits a piece of distributed data r2' that differs because of random number generation. At this time, by adding an identical (2) as the head serial number, the remote 20 can easily recognize that the pieces of distributed data r2 and r2' have been retransmitted. The other configurations are the same as those of embodiment 1.

According to present embodiment 2, when a failure to receive the acknowledgment-of-receipt notification signal ACK2 has occurred, the piece of distributed data r2' that differs from the previous piece of distributed data r2 is transmitted. Consequently, the potential for the pieces of distributed data r1 to r5 needed to reconstruct the master key rsm to end up leaking to a third party can be reduced even more, and the reliability of secret data transmission can be improved even more.

(Embodiment 3)

(Configuration of Embodiment 3)

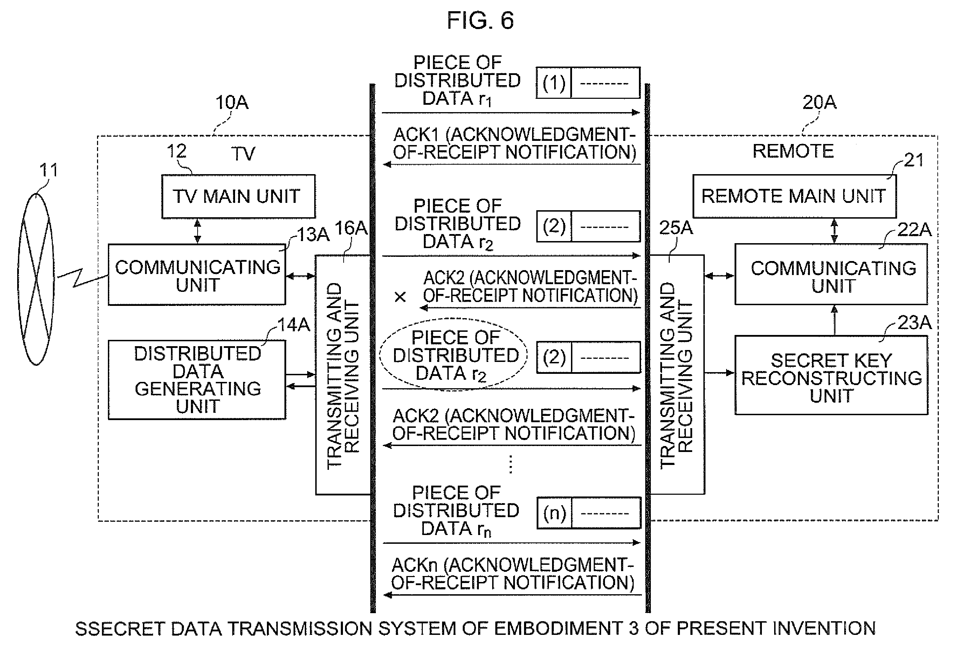

FIG. 6 is a configuration diagram showing an overview of a secret data transmission system in embodiment 3 of the present invention, and common reference numerals are given to elements shared in common with the elements in FIG. 2 showing embodiment 1.

In the secret data transmission system of present embodiment 3, instead of the TV 10 and the remote 20 of embodiment 1, there are disposed a TV 10A and a remote 20A whose configurations differ from those of the TV 10 and the remote 20.

The TV 10A has the same TV main unit 12 as that of embodiment 1 and a communicating unit 13A, a distributed data generating unit 14A, and a transmitting and receiving unit 16A whose configurations differ from those of embodiment 1. Moreover, the remote 20A has the same remote main unit 21 as that of embodiment 1 and a transmitting and receiving unit 25A, a communicating unit 22A, and a secret key reconstructing unit 23A whose configurations differ from those of embodiment 1.

Here, in the TV 10A, the communicating unit 13A generates a secret key and outputs the secret key to the distributed data generating unit 14A, The communicating unit 13A performs encrypted communication using the secret key when communicating with the remote 20A. The other functions of the communicating unit 13A are the same as those of the communicating unit 13 of embodiment 1. The distributed data generating unit 14A receives the secret key from the communicating unit 13A, generates distributed data including data of the secret key, assembles the distributed data into distributed data packets, and requests the transmitting and receiving unit 16A to transmit the distributed data packets. The transmitting and receiving unit 16A transmits, by a lower transmission power than the transmission power of ordinary packets, the distributed data packets it has been requested to transmit, and when the transmitting and receiving unit 16A has transmitted a distributed data packet, the transmitting and receiving unit 16A outputs a communication success signal to the distributed data generating unit 14A when it has received an acknowledgment-of-receipt signal from the remote 20A and outputs a communication failure signal to the distributed data generating unit 14A when it has not received an acknowledgment-of-receipt notification signal within a certain amount of time. The other functions of the transmitting and receiving unit 16A are the same as those of the transmitting and receiving unit 16 of embodiment 1.

In the remote 20A, when the transmitting and receiving unit 25A has received a distributed data packet, if the distributed data packet is a legitimate packet, it transmits the distributed data packet to the secret key reconstructing unit 23A and transmits an acknowledgment-of-receipt notification signal to the TV 10A. The other functions of the transmitting and receiving unit 25A are the same as those of the transmitting and receiving unit 20 of embodiment 1. The secret key reconstructing unit 23A reconstructs the secret key from the distributed data packets it has received and outputs the secret key to the communicating unit 22A. The communicating unit 22A receives the secret key from the secret key reconstructing unit 23A and performs encrypted communication when communicating with the TV 10A. The other functions of the communicating unit 22A are the same as those of the communicating unit 22 of embodiment 1.

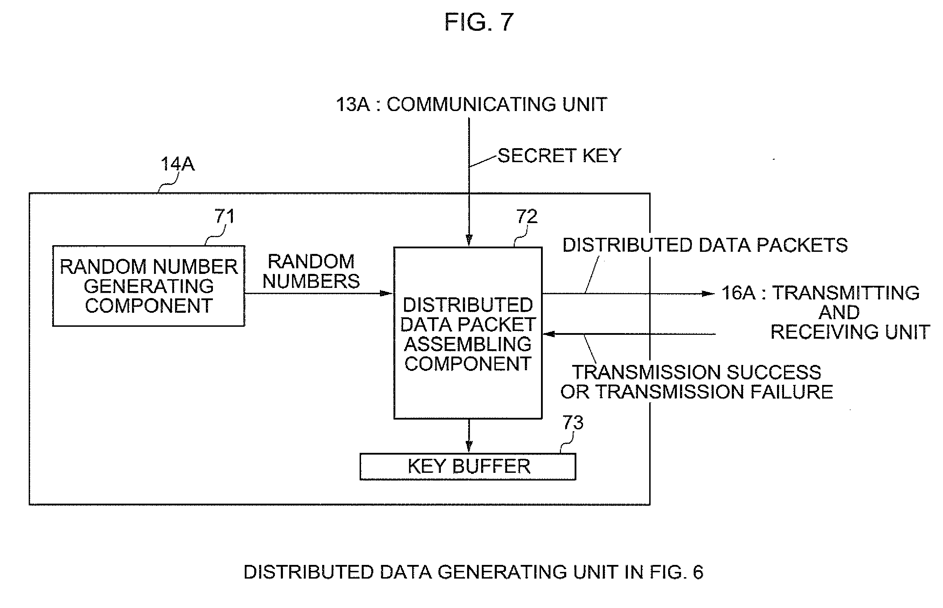

FIG. 7 is a functional block diagram showing the distributed data generating unit 14A in FIG. 6. This distributed data generating unit 14A has a random number generating component 71, a distributed data packet assembling component 72, and a key buffer 73, The random number generating component 71 generates random numbers and outputs the random numbers to the distributed data packet assembling component 72. The key buffer 73 is a buffer than can accumulate data of j bits.

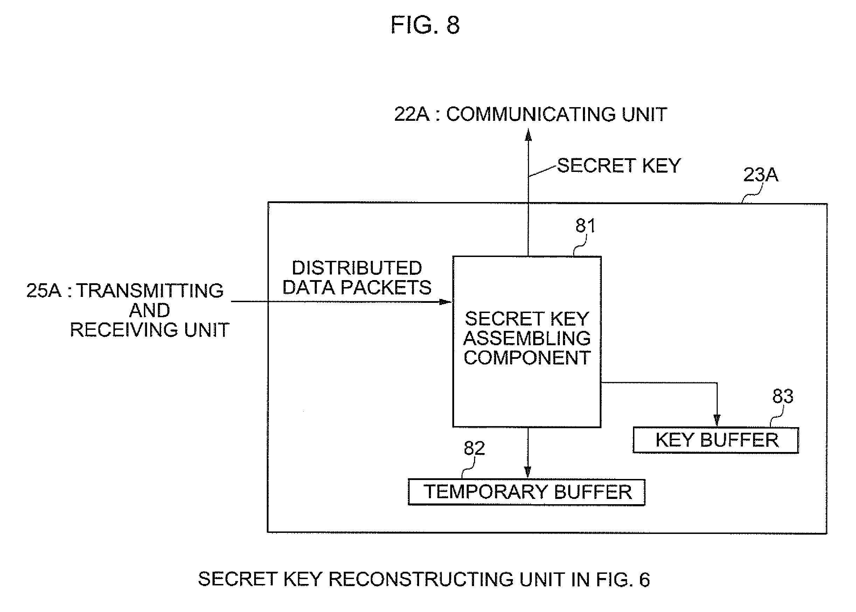

FIG. 8 is a functional block diagram showing the secret key reconstructing unit 23A in FIG. 6. This secret key reconstructing unit 23A has a secret key assembling component 81, a temporary buffer 82, and a key buffer 83. The temporary buffer 82 is a buffer that accumulates the distributed data packets it has received, and the key buffer 83 is a buffer that accumulates data of j bits.

(Secret Data Transmission Method of Embodiment 3)

In the secret data transmission method of present embodiment 3, the operation (1) of the distributed data packet assembling component 72 in the distributed data generating unit 14A of FIG. 7 and the operation (2) of the secret key assembling component 81 in the secret key reconstructing component 23A of FIG. 8 will be described below.

(1) Operation of Distributed Data Packet Assembling Component 72 in Distributed Data Generating Unit 14A

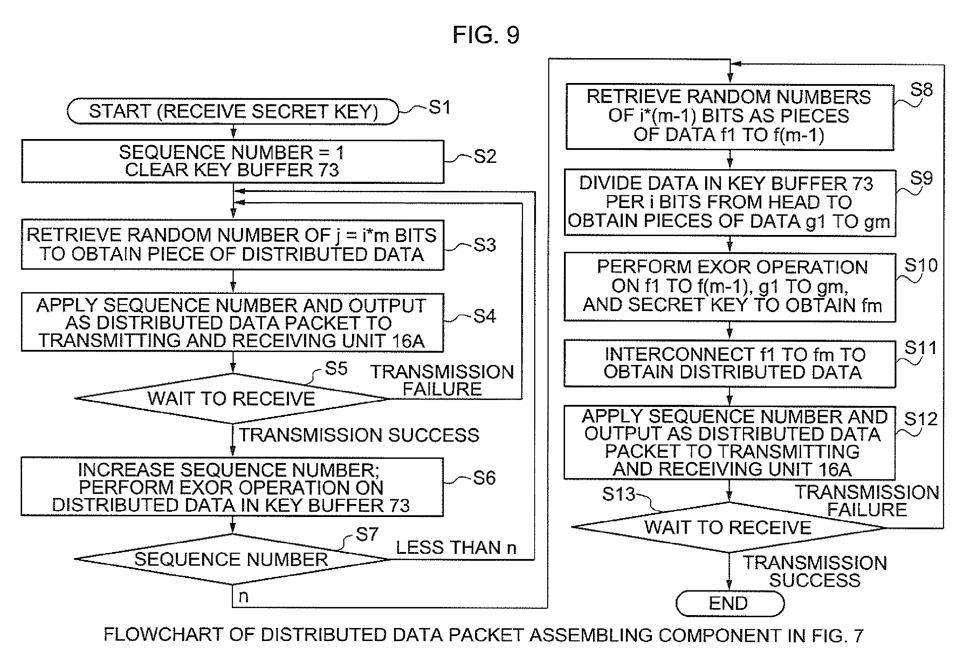

FIG. 9 is a flowchart showing the operation of the distributed data packet assembling component 72 in the distributed data generating unit 14A of FIG. 7.

When the distributed data packet assembling component 72 receives the secret key from the communicating unit 13A (step S1), it sets the sequence number to 1 and clears the key buffer 73 (step S2). Then, the distributed data packet assembling component 72 retrieves random numbers of j bits from the random number generating component 71 to obtain distributed data (step S3), adds the sequence number, assembles the distributed data into a distributed data packet, and requests the transmitting unit 16A to transmit the distributed data packet (step S4). Then, the distributed data packet assembling component 72 waits for a transmission success signal or a transmission failure signal from the transmitting and receiving unit 16A (step S5). When the distributed data packet assembling component 72 has received a transmission success signal, it accumulates in the key buffer 73 data obtained by performing an EXOR operation on the distributed data that was successfully transmitted and the data in the key buffer 73. That is, the distributed data packet assembling component 72 performs an EXOR operation on distributed data R that was successfully transmitted and data k1 accumulated in the key buffer 73 to obtain $k2 = R$ xor $k1$ and accumulates k2 in the key buffer 73. Then, the distributed data packet assembling component 72 increases the sequence number by 1 (step S6).

When the sequence number is less than n, the distributed data packet assembling component 72 returns to step S3 and repeatedly performs generation and transmission of the distributed data packet (step S7). Further, when the distributed data packet assembling component 72 has received a transmission failure signal from the transmitting and receiving unit 16A in step S5, it returns to step S3 and repeatedly performs generation and transmission of the distributed data packet. In this case, the sequence number is maintained. When the sequence number is n in step S7, the distributed data packet assembling component 72 performs transmission processing of the last distributed packet (steps S8 to S13).

First, the distributed data packet assembling component 72 retrieves (m-1) number of random numbers of i bits from the random number generating component 71 to obtain pieces of data f1 to f(m-1) (step S8). Further, the distributed data packet assembling component 72 retrieves the accumulated data from the key buffer 73 and divides the data into g1 to gm pieces of data per i bits from the head (step S9). Moreover, the distributed data packet assembling component 72 performs an EXOR operation sequentially on f1 to f(m-1), g1 to gm, and the secret key to generate data fm of i bits (step S10). Then, the distributed data packet assembling component 72 sequentially interconnects (performs an EXOR operation on) f1 to fm to create the last piece of distributed data (step S11).

The distributed data packet assembling component 72 applies sequence number n to this last piece of distributed data to create a distributed data packet and requests the transmitting and receiving unit 16A to transmit the distributed data packet (step S12). Then, the distributed data packet assembling component 72 waits for a transmission success signal or a transmission failure signal from the transmitting and receiving unit 16A (step S13). When the transmitting and receiving unit 16A has notified the distributed data packet assembling component 72 that transmission of this distributed data packet has been a success, the distributed data packet assembling component 72 ends the processing, and when the transmitting and receiving unit 16A has notified the distributed data packet assembling component 72 that transmission of this distributed data packet has been a failure, the distributed data packet assembling component 72 returns to step S8, creates the last piece of distributed data again, and transmits the last piece of distributed data.

(2) Operation of Secret Key Assembling Component 81 in Secret Key Reconstructing Unit 23A

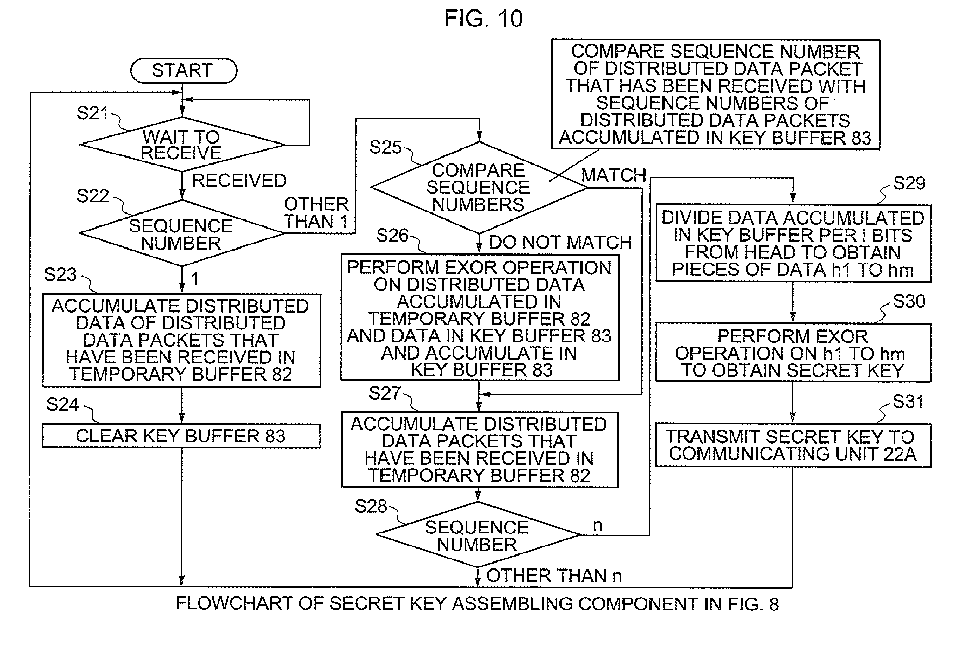

FIG. 10 is a flowchart showing the operation of the secret key assembling component 81 in the secret key reconstructing unit 23A of FIG. 8.

The secret key assembling component 81 waits to receive a distributed data packet (step S21). When the secret key assembling component 81 has received a distributed data packet, it checks the sequence number (step S22). When the sequence number is 1, the secret key assembling component 81 accumulates the distributed data packet it has received in the temporary buffer 82 (step S23). Moreover, the secret key assembling component 81 clears the key buffer 83 (step S24). Then, the secret key assembling component 81 returns to step S21-that is, it returns to waiting to receive a distributed data packet.

When the sequence number of the distributed data packet that the secret key assembling component 81 has received is a number other than 1, the secret key assembling component 81 compares the sequence number of the distributed data packet it has received with the sequence numbers of the distributed data packets accumulated in the key buffer 83 (step S25). When the sequence numbers do not match, the secret key assembling component 81 performs an EXOR operation on the distributed data of the distributed data packet accumulated in the temporary buffer 82 and the data accumulated in the key buffer 83 and accumulates the data in the key buffer 83 (step S26). Then, the secret key assembling component 81 accumulates in the temporary buffer 82 the distributed data packet it has received (step S27).

When the sequence numbers match in step S25, the secret key assembling component 81 executes step S27. After executing step S27, the secret key assembling component 81 checks the sequence number again (step S28). When the sequence number is a number other than n, the secret key assembling component 81 returns to step S21 and waits to receive a distributed data packet. When the sequence number is n in step S28, the secret key assembling component 81 divides the data accumulated in the key buffer 83 into m number of pieces of data hl to hm per i bits from the head (step S29). Moreover, the secret key assembling component 81 performs an EXOR operation in sequence on the pieces of data hl to hm to obtain the master key of i bits (step S30). The secret key assembling component 81 outputs this secret key to the communicating unit 22A and ends the processing (step S31).

When the sequence number was n in step S28, the secret key assembling component 81 implemented step S29 on. However, the secret key assembling component 81 may also be configured such that, when the sequence number is n in step S28, it waits an amount of time assumed for retransmission of a distributed data packet to receive a distributed data packet, executes step S22 on when it has received a distributed data packet during that time, and executes step S29 on when it does not receive a distributed data packet during that time. Thus, retransmission processing of the distributed data packet having the sequence number n can be performed.

(Effects of Embodiment 3)

In present embodiment 3, there are effects that are substantially the same as those of embodiment 1.

(Embodiment 4)

(Configuration of Embodiment 4)

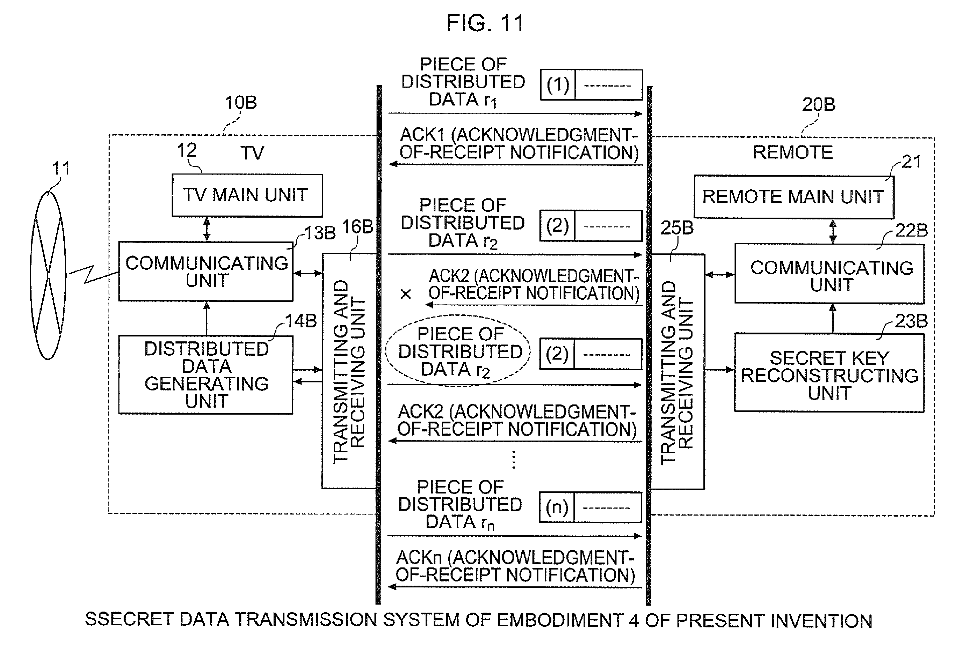

FIG. 11 is a configuration diagram showing an overview of a secret data transmission system in embodiment 4 of the present invention, and common reference numerals are given to elements shared in common with the elements in FIG. 6 showing embodiment 3.

In the secret data transmission system of present embodiment 4, instead of the TV 10A and the remote 20A of embodiment 3, there are disposed a TV 10B and a remote 20B whose configurations differ from those of the TV 10A and the remote 20A.

The TV 10B has the same TV main unit 12 as that of embodiment 3 and a communicating unit 13B, a distributed data generating unit 14B, and a transmitting and receiving unit 16B whose configurations differ from those of embodiment 3. Moreover, the remote 20B has the same remote main unit 21 as that of embodiment 3 and a transmitting and receiving unit 25B, a communicating unit 22B, and a secret key reconstructing unit 23B whose configurations differ from those of embodiment 3.

Here, in the TV 10B, the communicating unit 13B acquires the secret key from the distributed data generating unit 14B and performs encrypted communication using the secret key when communicating with the remote 20B. The other functions of the communicating unit 13B are the same as those of the communicating unit 13 of embodiment 1. The distributed data generating unit 14B generates distributed data including random numbers when acquisition of the secret key has been requested from the communicating unit 13B. Additionally, the distributed data generating unit 14B assembles the distributed data into distributed data packets, requests the transmitting and receiving unit 16B to transmit the distributed data packets to the remote 20B, generates a secret key from the distributed data it has generated, and outputs the secret key to the communicating unit 13B.

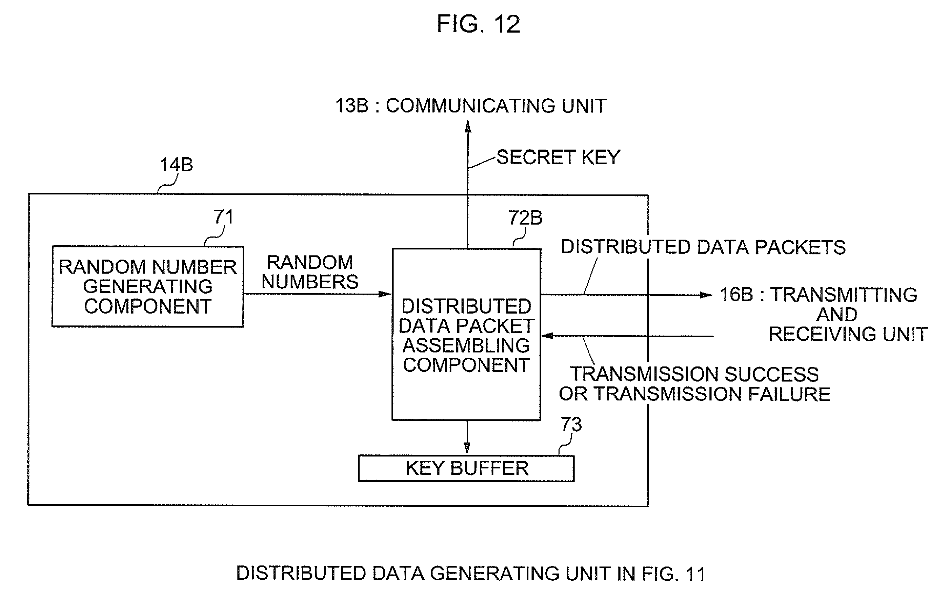

FIG. 12 is a functional block diagram showing the distributed data generating unit 14B in FIG. 11. The distributed data generating unit 14B has the same random number generating component 71 and buffer 73 as those of embodiment 3 and a distributed data packet assembling component 72B that differs from that of embodiment 3. The other configurations are the same as those of embodiment 3.

(Secret Data Transmission Method of Embodiment 4)

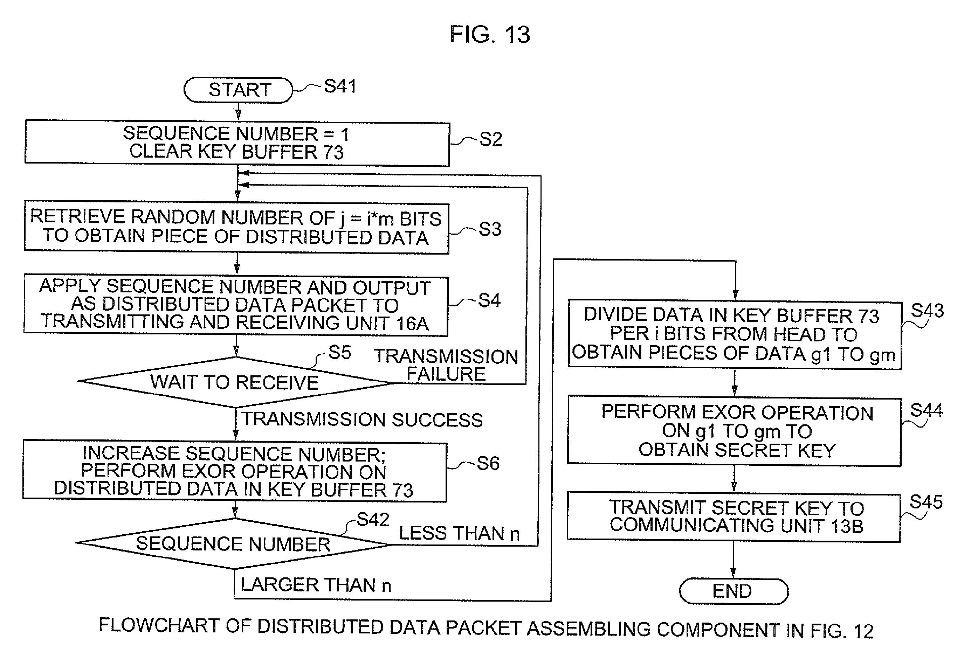

FIG. 13 is a flowchart showing the operation of the distributed data packet assembling component 72B in the distributed data generating unit 14B of FIG. 12, and common reference numerals are given to elements shared in common with the elements in FIG. 9 showing embodiment 3.

When the secret key is requested of the distributed data packet assembling component 72B from the communicating unit 13B (step S41), the distributed data packet assembling component 72B sets the sequence number to 1 and clears the key buffer 73 (step S2). Moreover, the distributed data packet assembling component 72B retrieves random numbers of j bits from the random number generating component 71 to obtain distributed data (step S3), adds the sequence number, assembles the distributed data into a distributed data packet, and requests the transmitting unit 16B to transmit the distributed data packet (step S4). Then, the distributed data packet assembling component 72B waits for a transmission success signal or a transmission failure signal from the transmitting and receiving component 16B (step S5).

When the distributed data packet assembling component 72B has received a transmission success signal, it accumulates in the key buffer 73 data obtained by performing an EXOR operation on the distributed data that was successfully transmitted and the data in the key buffer 73. That is, the distributed data packet assembling component 72B performs an EXOR operation on distributed data R that was successfully transmitted and data k I accumulated in the key buffer 73 to obtain k2 = R xor k1 and accumulates k2 in the key buffer 73. Then, the distributed data packet assembling component 72B increases the sequence number by 1. (step S6).

Next, the distributed data packet assembling component 72B checks the sequence number (step S42). When the sequence number is equal to or less than n, the distributed data packet assembling component 72B returns to step S3, creates the distributed data packet again, and transmits the distributed data packet. When the sequence number is larger than n in step S42, the distributed data packet assembling component 72B retrieves the accumulated data from the key buffer 73 and divides the accumulated data into g1 to gm pieces of data per i bits from the head (step S43). Then, the distributed data packet assembling component 72B performs an EXOR operation sequentially on g1 to gm to generate the secret key of i bits (step S44). Lastly, the distributed data packet assembling component 72B transmits the secret key to the communicating unit 13B and ends the processing.

(Effects of Embodiment 4)

In present embodiment 4, there are effects that are substantially the same as those of embodiment 1.

(Modifications)

The present invention is not limited to the embodiments described above, and various modes of use and modifications are possible. As these modes of use and modifications, there are the following (a) to (c), for example.

(a) The pieces of data rs1 to rsm such as the master key rsm may be changed to a number of bits other than 128 bits, and the pieces of distributed data r1 to rn may be changed to a number of bits other than 640 bits.

(b) In the embodiments, the secret data rs and the fifth piece of distributed data r5 are obtained by an EXOR operation, but action and effects that are substantially the same can be expected even when an exclusive-NOR (EXNOR) operation is used instead of this EXOR operation.

(c) In the embodiments, a credit card transaction function using the TVs 10, 10A, and 10B was described. However, the present invention can also be applied to other functions. Further, in the embodiments, the TVs 10, 10A, and 10B were taken as examples of the transmitting side and described, and the remotes 20, 20A, and 20B were taken as examples of the receiving side and described. However, the present invention can also be applied to digital home electrical appliances and devices other than the TVs 10, 10A, and 10B as the transmitting side and can also be applied to terminal devices other than the remotes 20, 20A, and 20B as the receiving side corresponding to the transmitting side.

**Claims**

1. A secret data transmission method where a first device generates first to nth (n is an arbitrary integer) pieces of distributed data including data of a master key of i bits (i is an arbitrary integer) and transmits the first to nth pieces of distributed data by wireless communication to a second device and where the second device receives the first to nth pieces of distributed data and reconstructs the master key of i bits,
   wherein
   the first device arranges first to (m-1)th (m is an arbitrary integer) pieces of data rs1 to rs(m-1) comprising random numbers of i bits and an mth piece of data rm that is obtained by performing a logic operation, based on whether bit values match or do not match, in sequence on the first to (m-1)th pieces of data rs1 to rs(m-1) and the master key to generate secret data of j bits = i bits $\times$ m bits,
   the first device generates first to (n-1)th pieces of distributed data r1 to r(n-1) comprising random numbers of j bits and an nth piece of distributed data rn of j bits that is obtained by performing a logic operation, based on whether bit values match or do not match, in sequence on the first to (n-1)th pieces of distributed data and the secret data,
   the first device transmits the first to nth pieces of distributed data r1 to rn to the second device,
   the second device receives the first to nth pieces of distributed data r1 to rn,
   the second device performs a logic operation, based on whether bit values match or do not match, in sequence on the first to nth pieces of distributed data r1 to rn that have been received to reconstruct the secret data,
   the second device divides the reconstructed secret data per i bits to obtain m number of first to mth pieces of data rs1 to rsm, and
   the second device performs a logic operation, based on whether bit values match or do not match, on the first to mth pieces of data rs1 to rsm that have been divided to reconstruct the master key of i bits.

2. The secret data transmission method according to claim 1, wherein
   when the second device has received each of the first to nth pieces of distributed data r1 to rn, the second device transmits an acknowledgment-of-receipt notification signal to the first device, and
   when there ends up being a reception failure when the first device receives the acknowledgment-of-receipt notification signals, the first device retransmits the same piece of distributed data to the second device.

3. The secret data transmission method according to claim 1, wherein
   when the second device has received each of the first to nth pieces of distributed data r1 to rn, the second device transmits an acknowledgment-of-receipt notification signal to the first device, and
   when there ends up being a reception failure when the first device receives the acknowledgment-of-receipt notification signals, the first device retransmits the piece of distributed data which differs because of random number generation to the second device.

4. The secret data transmission method according to claim 3, wherein the first device retransmitting the piece of distributed data which differs because of random number generation to the second device includes the first device adding a sequence number that is identical to previously to, and retransmitting, the differing piece of distributed data when there ends up being the reception failure.

5. The secret data transmission method according to any one of claims 1 to 4, wherein transmission power by which the first to nth pieces of distributed data r1 to rn are transmitted is smaller as compared to transmission power when transmitting the acknowledgment-of-receipt notification signals.

6. The secret data transmission method according to any one of claims 1 to 4, wherein transmission power by which the first to nth pieces of distributed data r1 to rn are transmitted is smaller as compared to transmission power when transmitting ordinary data.

7. A secret data transmission method where a first device generates distributed data including data of a master key of i bits (i is an arbitrary integer) and transmits the distributed data by wireless communication to a second device and where the second device transmits an acknowledgment-of-receipt signal to the first device when the second device has normally received the distributed data and reconstructs the master key from the distributed data that the second device has normally received,
wherein
the first device transmits first to (n-1)th pieces of distributed data r1 to r(n-1)each differing and comprising random numbers of j bits to the second device,
the first device generates m-1 number of pieces of distributed data f1 to f(m-1) each differing and comprising random numbers of i bits when the first device has received the acknowledgment-of-receipt signals corresponding to the first to (n-1)th pieces of distributed data,
the first device performs a logic operation, based on whether bit values match or do not match, in sequence on data obtained by dividing per i bits the first to (n-1)th pieces of distributed data corresponding to the acknowledgment-of-receipt signals, the pieces of data f1 to f(m-1), and the master key to obtain an mth piece of data fm,
the first device transmits data obtained by interconnecting the pieces of data f1 to fin in sequence as an nth piece of distributed data rn to the second device,
the second device receives the first to nth pieces of distributed data r1 to rn,
the second device performs a logic operation, based on whether bit values match or do not match, in sequence on the first to nth pieces of distributed data r1 to rn that have been received to reconstruct secret data,
the second device divides the reconstructed secret data per i bits to obtain m number of first to mth pieces of data rs1 to rsm, and
the second device performs a logic operation, based on whether bit values match or do not match, in sequence on the first to mth pieces of data rs1 to rsm that have been divided to reconstruct the master key of i bits.

8. A secret data transmission method where a first device generates distributed data including data of a master key of i bits (i is an arbitrary integer) and transmits the distributed data by wireless communication to a second device and where the second device transmits an acknowledgment-of-receipt signal to the first device when the second device has normally received the distributed data and reconstructs the master key from the distributed data that the second device has normally received,
wherein
the first device transmits first to nth pieces of distributed data r1 to rn each differing and comprising random numbers of j bits to the second device,
the first device generates the master key by performing a logic operation, based on whether bit values match or do not match, in sequence on data obtained by dividing per i bits the first to nth pieces of distributed data corresponding to the acknowledgment-of-receipt signals when the first device has received the acknowledgment-of-receipt signals corresponding to the first to nth pieces of distributed data,
the second device receives the first to nth pieces of distributed data r1 to rn,
the second device performs a logic operation, based on whether bit values match or do not match, in sequence on the first to nth pieces of distributed data r1 to rn that have been received to reconstruct secret data,
the second device divides the reconstructed secret data per i bits to obtain m number of first to mth pieces of data rs1 to rsm, and
the second device performs a logic operation, based on whether bit values match or do not match, on the first to mth pieces of data rs1 to rsm that have been divided to reconstruct the master key of i bits.

9. The secret data transmission method according to any one of claims 1 to 8, wherein the logic operation based on whether bit values match or do not match is an exclusive-OR operation or an exclusive-NOR operation.

10. The secret data transmission method according to any one of claims 1 to 9, wherein
the first device is a digital home electrical appliance connected to a communication network, and
the second device is a remote controller that remotely controls the digital home electrical appliance.

11. A secret data transmission system where a first device generates first to nth (n is an arbitrary integer) pieces of distributed data including data of a master key of i bits (i is an arbitrary integer) and transmits the first to nth pieces of distributed data by wireless communication to a second device and where the second device receives the first to nth pieces of distributed data and reconstructs the master key of i bits,
wherein
the first device has
secret data generating unit that arranges first to (m-1)th (m is an arbitrary integer) pieces of data rs1 to rs(m-1) comprising random numbers of 1 bits and an mth piece of data rm that is obtained by performing an exclusirle-OR operation in sequence on the first to (m-1)th pieces of data rs1 to rs(m-1) and the master key of i bits to generate secret data of j bits = i bits X m bits,
distributed data generating unit that generates, from first to (n-1)th pieces of distributed data r 1 to r(n-1) comprising random numbers of the j bits and an mth piece of distributed data rn of the j bits that is obtained by performing an exclusive-OR operation in sequence on the first to (n-1)th pieces of distributed data and the secret data of j bits, the first to mth pieces of distributed data r1 to rn, and
first transmitting and receiving unit that transmits the first to mth pieces of distributed data r1 to rn to the second device, and
the second device has
transmitting and receiving unit that receives the first to nth pieces of distributed data r1 to rn,
secret data reconstructing unit that performs an exclusive-OR operation in sequence on the first to nth pieces of distributed data that have been received to reconstruct the secret data of j bits, and
master key reconstructing unit that divides the secret data of j bits that has been reconstructed into the m number to obtain the first to mth pieces of data rs 1 to rsm and performs an exclusive-OR operation on the first to mth pieces of data is to rsm, that have been divided to reconstruct the master key of i bits.

12. The secret data transmission system according to claim 11, wherein
the first device is a digital home electrical appliance connected to a communication network, and
the second device is a remote controller that remotely controls the digital home electrical appliance.

13. A secret data transmission device comprising:

a distributed data generating unit that generates m (m is a positive integer equal to or greater than 2) number of pieces of random number data comprising random numbers of i (i is an arbitrary positive integer) bits and generates pieces of distributed data comprising the m number of pieces of random number data it has generated and sequence numbers representing a packet transmission sequence; and
a transmitting and receiving unit that transmits the pieces of distributed data via a wireless communication path to a secret data receiving device and receives acknowledgment-of-receipt signals with respect to those pieces of distributed data that are transmitted from that secret data receiving device,
wherein
when the transmitting and receiving unit does not receive, within a certain amount of time after transmitting a piece of distributed data, an acknowledgment-of-receipt signal corresponding to the piece of distributed data it has transmitted, the distributed data generating unit generates a new piece of distributed data from a sequence number that is the same as the sequence number of that transmitted piece of distributed data and m number of pieces of random number data obtained as a result of being newly generated,
when the transmitting and receiving unit has received, within a certain amount of time after transmitting a piece of distributed data, an acknowledgment-of-receipt signal corresponding to the piece of distributed data it has transmitted, the distributed data generating unit generates a new piece of distributed data from a sequence number obtained by increasing the sequence number of that transmitted piece of distributed data by 1 and m number of pieces of random number data obtained as a result of being newly generated,
when the transmitting and receiving unit has received first to (n-1)th (n is a positive integer equal to or greater than 2) acknowledgment-of-receipt signals, the distributed data generating unit generates an nth piece of distributed data from values obtained by performing a logic operation on (m-1) number of pieces of random number data obtained as a result of being newly generated, a master key of i bits, and (n-1)*m number of pieces of random number data included in first to (n-1)th pieces of distributed data corresponding to the first to (n-1)th acknowledgment-of receipt signals and a sequence number obtained by increasing the sequence number of that (n-1)th piece of distributed data by 1, and

when the transmitting and receiving unit does not receive, within a certain amount of time after transmitting the nth piece of distributed data, an nth acknowledgment-of-receipt signal corresponding to that nth piece of distributed data, the distributed data generating unit generates a new mth piece of distributed data from values obtained by performing a logic operation on (m-1) number of pieces of random number data obtained as a result of being newly generated, the master key, and (n-1)*m number of pieces of random number data included in the first to (n-1)th pieces of distributed data and a sequence number that is the same as the sequence number of that nth piece of distributed data.

**14.** A secret data transmission device comprising:

a distributed data generating unit that generates m (m is a positive integer equal to or greater than 2) number of pieces of random number data comprising random numbers of i (i is an arbitrary positive integer) bits and generates pieces of distributed data comprising the no number of pieces of random number data it has generated and sequence numbers representing a packet transmission sequence; and

a transmitting and receiving unit that transmits the pieces of distributed data via a wireless communication path to a secret data receiving device and receives acknowledgment-of receipt signals with respect to those pieces of distributed data that are transmitted from that secret data receiving device,

wherein

when the transmitting and receiving unit does not receive, within a certain amount of time after transmitting a piece of distributed data, an acknowledgment-of-receipt signal corresponding to the piece of distributed data it has transmitted, the distributed data generating unit generates a piece of distributed data newly from a sequence number that is the same as the sequence number of that piece of distributed data and m number of pieces of random number data obtained as a result of being newly generated,

when the transmitting and receiving unit has received, within a certain amount of time after transmitting a piece of distributed data, an acknowledgment-of-receipt signal corresponding to the piece of distributed data it has transmitted, the distributed data generating unit generates a piece of distributed data newly from a sequence number obtained by increasing the sequence number of that piece of distributed data by 1 and m number of pieces of random number data obtained as a result of being newly generated, and

when the transmitting and receiving unit has received first to nth (n is a positive integer equal to or greater than 2) acknowledgment-of-receipt signals, the distributed data generating unit performs a logic operation on n*m number of pieces of random number data included in first to nth pieces of distributed data corresponding to those first to nth acknowledgment-of-receipt signals to generate a master key of i bits.

## FIG. 1A

## FIG. 1B

SECRET DATA TRANSMISSION SYSTEM OF
EMBODIMENT 1 OF PRESENT INVENTION

FIG. 2

**TV (10)**

- TV MAIN UNIT (12)
- COMMUNICATING UNIT (13)
- DISTRIBUTED DATA GENERATING UNIT (14)
- TRANSMISSION CONFIRMING UNIT (15)
- TRANSMITTING AND RECEIVING UNIT (16)
- (11)

**REMOTE (20)**

- REMOTE MAIN UNIT (21)
- COMMUNICATING UNIT (22)
- SECRET KEY RECONSTRUCTING UNIT (23)
- RECEIPT ACKNOWLEDGING UNIT (24)
- TRANSMITTING AND RECEIVING UNIT (25)

PIECE OF DISTRIBUTED DATA $r_1$ (1)

ACK1 (ACKNOWLEDGMENT-OF-RECEIPT NOTIFICATION)

PIECE OF DISTRIBUTED DATA $r_2$ (2)

ACK2 (ACKNOWLEDGMENT-OF-RECEIPT NOTIFICATION) ×

PIECE OF DISTRIBUTED DATA $r_2$ (2)

ACK2 (ACKNOWLEDGMENT-OF-RECEIPT NOTIFICATION)

PIECE OF DISTRIBUTED DATA $r_n$ (n)

ACKn (ACKNOWLEDGMENT-OF-RECEIPT NOTIFICATION)

SECRET DATA TRANSMISSION SYSTEM OF EMBODIMENT 1 OF PRESENT INVENTION

## FIG. 3

$r_{s1}$ = 128-BIT RANDOM NUMBER

| 10101010...0 |

640-BIT SECRET DATA rs (DATA HOLDING CIRCUIT)    43

| $r_{s1}$ | $r_{s3}$ | $r_{s3}$ | $r_{s4}$ | $r_{s5}$ |

$r_{s2}$ = 128-BIT RANDOM NUMBER

| 11001100...0 |

41

RANDOM GENERATOR

$r_{s3}$ = 128-BIT RANDOM NUMBER

| 11100011...1 |

$r_{s4}$ = 128-BIT RANDOM NUMBER

| 11110000...0 |

COMPUTING UNIT

$r_{s5} = r_{s1} \oplus r_{s2} \oplus r_{s3} \oplus r_{s4} \oplus$ 128-BIT MASTER KEY ma

42

| 01111010...1 |

128-BIT MASTER KEY ma

| 00001111...1 |

SECRET DATA GENERATING UNIT IN FIG. 1

EP 2 357 753 A1

# FIG. 4

INPUT : 640-BIT SECRET DATA rs
$= r_{s1} + r_{s2} + \cdots + r_{sn}$

43

| $r_{s1}$ | $r_{s2}$ | $r_{s3}$ | $r_{s4}$ | $r_{s5}$ |
|---|---|---|---|---|

61-1

61-2

61-3

61-4

OUTPUT : 128-BIT MASTER KEY ma $= r_{s1} \oplus r_{s2} \oplus r_{s3} \oplus r_{s4} \oplus r_{s5}$

MASTER KEY RECONSTRUCTING UNIT IN FIG. 1

# FIG. 5

SECRET DATA TRANSMISSION SYSTEM OF EMBODIMENT 2 OF PRESENT INVENTION

EP 2 357 753 A1

## FIG. 6

SSECRET DATA TRANSMISSION SYSTEM OF EMBODIMENT 3 OF PRESENT INVENTION

EP 2 357 753 A1

FIG. 7

13A : COMMUNICATING UNIT

SECRET KEY

14A

71

| RANDOM NUMBER GENERATING COMPONENT |

RANDOM NUMBERS

72

DISTRIBUTED DATA PACKETS

| DISTRIBUTED DATA PACKET ASSEMBLING COMPONENT |

16A : TRANSMITTING AND RECEIVING UNIT

TRANSMISSION SUCCESS OR TRANSMISSION FAILURE

73

| KEY BUFFER |

DISTRIBUTED DATA GENERATING UNIT IN FIG. 6

EP 2 357 753 A1

# FIG. 8

22A : COMMUNICATING UNIT

SECRET KEY

DISTRIBUTED DATA PACKETS

81 — SECRET KEY ASSEMBLING COMPONENT

83 — KEY BUFFER

82 — TEMPORARY BUFFER

23A

25A : TRANSMITTING AND RECEIVING UNIT

SECRET KEY RECONSTRUCTING UNIT IN FIG. 6

# FIG. 9

START (RECEIVE SECRET KEY) — S1

↓

SEQUENCE NUMBER = 1
CLEAR KEY BUFFER 73 — S2

↓

RETRIEVE RANDOM NUMBER OF $j = i*m$ BITS
TO OBTAIN PIECE OF DISTRIBUTED DATA — S3

↓

APPLY SEQUENCE NUMBER AND OUTPUT
AS DISTRIBUTED DATA PACKET TO
TRANSMITTING AND RECEIVING UNIT 16A — S4

↓

WAIT TO RECEIVE — S5 → TRANSMISSION FAILURE

↓ TRANSMISSION SUCCESS

INCREASE SEQUENCE NUMBER;
PERFORM EXOR OPERATION ON
DISTRIBUTED DATA IN KEY BUFFER 73 — S6

↓

SEQUENCE NUMBER — S7 → LESS THAN n

n

---

RETRIEVE RANDOM NUMBERS
OF $i*(m-1)$ BITS AS PIECES
OF DATA f1 TO f(m-1) — S8

↓

DIVIDE DATA IN KEY BUFFER 73
PER i BITS FROM HEAD TO
OBTAIN PIECES OF DATA g1 TO gm — S9

↓

PERFORM EXOR OPERATION
ON f1 TO f(m-1), g1 TO gm,
AND SECRET KEY TO OBTAIN fm — S10

↓

INTERCONNECT f1 TO fm TO
OBTAIN DISTRIBUTED DATA — S11

↓

APPLY SEQUENCE NUMBER AND
OUTPUT AS DISTRIBUTED DATA
PACKET TO TRANSMITTING
AND RECEIVING UNIT 16A — S12

↓

S13 — WAIT TO RECEIVE → TRANSMISSION FAILURE

↓ TRANSMISSION SUCCESS

END

FLOWCHART OF DISTRIBUTED DATA PACKET ASSEMBLING COMPONENT IN FIG. 7

## FIG. 10

FLOWCHART OF SECRET KEY ASSEMBLING COMPONENT IN FIG. 8

EP 2 357 753 A1

## FIG. 11

SSECRET DATA TRANSMISSION SYSTEM OF EMBODIMENT 4 OF PRESENT INVENTION

EP 2 357 753 A1

## FIG. 12

13B : COMMUNICATING UNIT

SECRET KEY

14B

71
RANDOM NUMBER GENERATING COMPONENT

RANDOM NUMBERS

72B
DISTRIBUTED DATA PACKET ASSEMBLING COMPONENT

DISTRIBUTED DATA PACKETS

16B : TRANSMITTING AND RECEIVING UNIT

TRANSMISSION SUCCESS OR TRANSMISSION FAILURE

73
KEY BUFFER

DISTRIBUTED DATA GENERATING UNIT IN FIG. 11

EP 2 357 753 A1

## FIG. 13

FLOWCHART OF DISTRIBUTED DATA PACKET ASSEMBLING COMPONENT IN FIG. 12

EP 2 357 753 A1

<table>
<tr><td align="center" colspan="2"><b>INTERNATIONAL SEARCH REPORT</b></td><td>International application No.<br><br>PCT/JP2009/069395</td></tr>
</table>

| A. CLASSIFICATION OF SUBJECT MATTER |
|---|
| *H04L9/08*(2006.01)i, *H04N7/167*(2006.01)i |

According to International Patent Classification (IPC) or to both national classification and IPC

| B. FIELDS SEARCHED |
|---|
| Minimum documentation searched (classification system followed by classification symbols)<br>H04L9/08, H04N7/167 |

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2007-235516 A (Oki Electric Industry Co., Ltd.),<br>13 September 2007 (13.09.2007),<br>paragraphs [0044] to [0069]<br>(Family: none) | 1-14 |
| A | JP 2008-98894 A (KDDI Corp.),<br>24 April 2008 (24.04.2008),<br>entire text; all drawings<br>(Family: none) | 1-14 |
| A | JP 2005-79975 A (Hitachi, Ltd.),<br>24 March 2005 (24.03.2005),<br>entire text; all drawings<br>& US 2005/0048952 A1   & CN 1592192 A | 1-14 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>05 February, 2010 (05.02.10) | Date of mailing of the international search report<br>16 February, 2010 (16.02.10) |
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007235516 A